# EUROPÄISCHE PATENTANMELDUNG

(11) **EP 0 716 261 A2**
(43) Veröffentlichungstag der Anmeldung: **12.06.1996**
(21) Anmeldenummer: 95117227.9
(22) Anmeldetag: 02.11.1995
(51) Int. Cl.: F16L 37/248, B05B 15/06

(54) **Verbindungseinrichtung zum Anschliessen von Spritzdüsen an eine Druckleitung**

(30) Priorität: 08.12.1994 DE 4443683
(71) Anmelder: INDA INDUSTRIEAUSRÜSTUNGEN GmbH, D-72666 Neckartailfingen (DE)
(72) Erfinder: Ponterlitschek, Roland, D-72636 Linsenhofen (DE)
(74) Vertreter: Vetter, Hans, Dipl.-Phys. Dr.

(57) **Zusammenfassung**

Es wird eine Verbindungseinrichtung zum Anschließen von Spritzdüsen (10) an eine Druckleitung (15) vorgeschlagen. Ein erstes,an der Druckleitung (15) fest fixierbares Verbindungsteil (14) weist einen rohrförmigen Druckmittelauslaßbereich (24) und einen Verriegelungszylinder (23) auf. Ein zweites, die Spritzdüse (10) tragendes Verbindungsteil (13) besitzt ein auf den Verriegelungszylinder (23) aufschiebbares Verriegelungsrohr (19) und einen den Druckmittelauslaßbereich (24) des ersten Verbindungsteils (14) im aufgeschobenen Zustand aufnehmenden Druckmittelkanal (20). Der Druckmittelauslaßbereich (24) und/oder der Druckmittelkanal (20) sind mit wenigstens einer Ringdichtung (25) versehen. Zur gegenseitigen Verriegelung der beiden Verbindungsteile (13, 14) ist eine das Verriegelungsrohr (19) am Verriegelungszylinder (23) lösbar haltende bajonettverschlußartige Steck-Dreh-Verriegelung (29) vorgesehen. Durch diese Verbindungseinrichtung ist ein schnelles und sicheres Auswechseln von Spritzdüsen an einer Druckleitung möglich, wobei die Verbindungseinrichtung bei einfacher konstruktiver Ausgestaltung sehr hohe Drücke von vielen 100 bar aufnehmen kann.

## Beschreibung

Die Erfindung betrifft eine Verbindungseinrichtung zum Anschließen von Spritzdüsen an eine Druckleitung. Derartige Spritzdüsen dienen beispielsweise zum Entgraten, Reinigen, Schneiden und Bohren von Werkstücken mittels eines Flüssigkeits-Spritzstrahls und können bei Arbeitsdrücken von mehreren 100 bar arbeiten. Für die verschiedenen Arbeitsvorgänge an verschiedenen Werkstücken ist es erforderlich, verschiedene für die einzelnen Arbeitsvorgänge benötigte Spritzdüsen in einer vorbestimmten Reihenfolge einzusetzen. Bei bekannten Anordnungen sind die Spritzdüsen mit den jeweiligen Druckleitungen verschraubt, wodurch ein Auswechseln solcher Spritzdüsen arbeitsintensiv und zeitaufwendig ist. Bei anderen bekannten Vorrichtungen sind mehrere verschiedene Spritzdüsen an jeweils zugeordneten Druckleitungen befestigt und werden individuell in die jeweilige Arbeitsposition bewegt. Der dafür erforderliche technische und finanzielle Aufwand ist nicht unerheblich.

Eine Aufgabe der vorliegenden Erfindung besteht darin, eine Verbindungseinrichtung zum schnellen und einfachen Anschließen und Auswechseln von Spritzdüsen an einer Druckleitung zu schaffen.

Diese Aufgabe wird erfindungsgemäß dadurch gelöst, daß ein erstes, an der Druckleitung fest fixierbares Verbindungsteil einen rohrförmigen Druckmittelauslaßbereich und einen Verriegelungszylinder aufweist, daß ein zweites, die Spritzdüse tragendes Verbindungsteil ein auf den Verriegelungszylinder aufschiebbares Verriegelungsrohr und einen den Druckmittelauslaßbereich des ersten Verbindungsteils im aufgeschobenen Zustand aufnehmenden Druckmittelkanal aufweist, daß der Druckmittelauslaßbereich und/oder der Druckmittelkanal mit wenigstens einer Ringdichtung versehen ist und daß eine das Verriegelungsrohr am Verriegelungszylinder lösbar haltende bajonettverschlußartige Steck-Dreh-Verriegelung vorgesehen ist.

Durch die bajonettverschlußartige Steck-Dreh-Verriegelung der erfindungsgemäßen Verbindungseinrichtung wird ein schnelles Anbringen und Lösen verschiedener Spritzdüsen an einer Druckleitung ermöglicht. Der Druck des Druckmittels trägt zum sicheren Halt der Spritzdüse an der Druckleitung bei, da dieser Druck die Steck-Dreh-Verriegelung mit einer axialen Haltekraft beaufschlagt, die bei Druckabschaltung entfällt, so daß dann wieder ein leichtes Lösen möglich ist. Durch den im aufgeschobenen Zustand den Druckmittelauslaßbereich des ersten Verbindungsteils dichtend aufnehmenden Druckmittelkanal im zweiten Verbindungsteil sind nur geringe Flächen im kleinen Radiusbereich der Verbindungseinrichtung durch den hohen Druck beaufschlagt, so daß auch bei sehr hohen Drücken eine entsprechende Sicherheit gewährleistet ist und der Materialaufwand und die Anforderungen an das Material in Grenzen gehalten werden können. Demgegenüber können der Verriegelungszylinder und das Verriegelungsrohr, die mit der Steck-Dreh-Verriegelung versehen sind, mit wesentlich größeren Durchmessern versehen werden, um eine gute Handhabbarkeit zu erreichen.

Durch die in den Unteransprüchen aufgeführten Maßnahmen sind vorteilhafte Weiterbildungen und Verbesserungen der im Anspruch 1 angegebenen Verbindungseinrichtung möglich.

Zum leichten und sicheren Aufschieben des ersten Verbindungsteils weist der Druckmittelkanal einen Einführungsbereich mit einem gegenüber dem des Druckmittelauslaßbereichs größeren Durchmesser auf, wobei dieser Einführungsbereich über einen Zwischenbereich mit allmählich abnehmendem Durchmesser in einen Dichtungsbereich zur dichtenden Aufnahme des Druckmittelauslaßbereichs übergeht. Hierdurch wird der Druckmittelauslaßbereich einfach und sicher in den Druckmittelkanal eingeführt.

In vorteilhafter Weise besitzt der Druckmittelauslaßbereich dabei einen am Verriegelungszylinder anschließenden Ringbereich, der im verriegelten Zustand der beiden Verbindungsteile im wesentlichen dichtend am Einführungsbereich anliegt, wobei zwischen dem Ringbereich und dem Dichtungsbereich wenigstens ein radialer Durchgangskanal durch das zweite Verbindungsteil mündet. Hierdurch tritt bei einer eventuellen Undichtigkeit der Ringdichtung Druckmittel aus diesem radialen Durchgangskanal aus und zeigt eine solche Undichtigkeit schnell und sicher an.

Eine zweckmäßige konstruktive Ausgestaltung der bajonettverschlußartigen Steck-Dreh-Verriegelung besteht darin, daß der Verriegelungszylinder des ersten Verbindungsteils wenigstens zwei radial nach außen weisende Bolzen oder Vorsprünge aufweist, die im verriegelten Zustand in bajonettverschlußartige Verriegelungsausnehmen des Verriegelungsrohrs eingreifen. Diese Verriegelungsausnehmungen besitzen dabei insbesondere einen axialen Einsteckbereich und einen dazu quer verlaufenden Drehbereich, der am Ende eine die Drehbewegung verhindernde Verrastungsausnehmung besitzt. In dieser Verrastungsausnehmung wird der zugeordnete Bolzen oder Vorsprung durch den Arbeitsdruck sicher gehalten, wobei vorzugsweise noch wenigstens eine zwischen dem steckseitigen Endbereich des Verriegelungsrohrs und einem Ringvorsprung am Verriegelungszylinder im verriegelten Zustand in axialer Richtung eine kraftausübende Druckfederanordnung vorgesehen ist, die auch im drucklosen Zustand eine versehentliche Entriegelung der Verbindungseinrichtung verhindert.

Um mehrere, insbesondere verschiedene, jeweils mit einem zweiten Verbindungsteil versehene Spritzdüsen sicher und leicht zugänglich aufbewahren zu können, ist in vorteilhafter Weise ein zur Aufnahme von mehreren der zweiten Verbindungsteile ausgebildetes Magazin vorgesehen.

In einer ersten vorteilhaften konstruktiven Ausgestaltung weist das zweite Verbindungsteil einen an das Verriegelungsrohr anschließenden, die Spritzdüse tragenden Haltebereich mit vieleckigem Querschnitt auf, der zur Aufnahme in dem zwei aneinander verschiebbare, mit mehreren Aufnahmeöffnungen versehene Halteplatten aufweisenden Magazin ausgebildet ist. Vorzugsweise besitzt der Haltebereich dabei wenigstens einen radial nach außen weisenden Vorsprung oder Bolzen, der zusammen mit dem Haltebereich eine Querschnittskontur aufweist, die der der Aufnahmeöffnungen einer der Halteplatten im wesentlichen entspricht, wobei durch Verschiebung der Halteplatten gegeneinander nach dem Durchstecken eine Verriegelung der Vorsprünge oder Bolzen erfolgt, so daß mit Spritzdüsen versehene zweite Halteteile sicher und doch leicht lösbar im Magazin gehalten werden können. Durch die Verdrehsicherheit bleibt die Winkelposition erhalten.

Bei einer zweiten vorteilhaften konstruktiven Ausgestaltung weist das zweite Verbindungsteil einen an das Verriegelungsrohr anschließenden, die Spritzdüse tragenden Haltebereich auf, wobei ein abgestufter, zwei unterschiedliche Querschnittskonturen aufweisender Verbindungsbereich zwischen dem Verriegelungsrohr und dem Haltebereich zur Aufnahme in ein zwei aneinander verschiebbare, mit mehreren Aufnahmeausnehmungen versehene Halteplatten aufweisendes Magazin ausgebildet ist. Vorzugsweise ist dabei die erste Querschnittskontur zum verdrehsicheren Halten in den schlitzartigen Aufnahmeausnehmungen der ersten Halteplatte ausgebildet, während die zweite Querschnittskontur an eine Verriegelungsausnehmung der zweiten Halteplatte angepaßt ist, die durch Verschiebung der beiden Halteplatten gegeneinander in Anlage an die zweite Querschnittskontur gelangt. Auch bei dieser zweiten konstruktiven Ausgestaltung treten vergleichbare Vorteile auf.

Das erste Verbindungsteil weist zum Zwecke der Fixierung an der Druckleitung einen entsprechenden Schraubanschluß und Drehverriegelungsmittel auf.

Um durch rotierende Spritzdüsen entsprechend rotierende Spritzstrahlen erzeugen zu können, ist die Druckleitung als in einem Lagergehäuse gelagerte Drehwelle ausgebildet, deren Drehung auch eine Rotation der entsprechenden drehfest damit verbundenen Spritzdüse bewirkt.

In einer vorteilhaften Ausgestaltung erstreckt sich ein Druckmittelkanal in der Drehwelle vom Anschlußende für das erste Verbindungsteil bis zu einem Druckmittel-Einspeisungsbereich und mündet dort radial in einem Ringkanal, der zwischen dem Druckmittel-Einspeisungsbereich und einem diesen umgreifenden Druckanschlußbereich des Lagergehäuses gebildet wird. Ein äußerer Druckanschluß des Druckanschlußbereichs ist über einen radialen Kanal mit dem Ringkanal verbunden. Hierdurch kann auf einfache Weise auch unter hohem Druck stehendes Druckmittel seitlich in die rotierende Drehwelle eingespeist und der Spritzdüse zugeführt werden.

In besonders einfacher und leicht montierbarer Weise besteht das im wesentlichen dreiteilige Lagergehäuse aus dem Druckanschlußbereich und zwei zu beiden Seiten desselben angeordneten Lagerbereichen für die Druckwelle. Hierdurch besteht das Lagergehäuse aus wenigen, einfach herzustellenden Teilen, die leicht zusammenmontiert und demontiert werden können.

Ausführungsbeispiele der Erfindung sind in der Zeichnung dargestellt und in der nachfolgenden Beschreibung näher erläutert. Es zeigen:
- Fig. 1: eine zum Teil im Schnitt dargestellte Verbindungseinrichtung, die mit einer Spritzdüse einerseits und der Drehwelle eines Lagergehäuses andererseits verbunden ist,
- Fig. 2: eine Seitenansicht des in Fig. 1 im Schnitt dargestellten zweiten Verbindungsteils der Verbindungseinrichtung,
- Fig. 3: ein für Verbindungsteile gemäß Fig. 2 geeignetes Magazin als Teildarstellung in einer Vorderansicht,
- Fig. 4: das in Fig. 3 dargestellte Magazin in einer Seitenansicht,
- Fig. 5: das in Fig. 3 dargestellte Magazin im verriegelten Zustand in der Seitenansicht,
- Fig. 6: ein zweites Ausführungsbeispiel eines zweiten Verbindungsteils, das in einem entsprechenden Magazin angeordnet ist,
- Fig. 7: eine Vorderansicht des in Fig. 6 dargestellten Magazins und
- Fig. 8: eine Schnittdarstellung des in Fig. 1 dargestellten Lagergehäuses für die als Drehwelle ausgebildete Druckleitung.

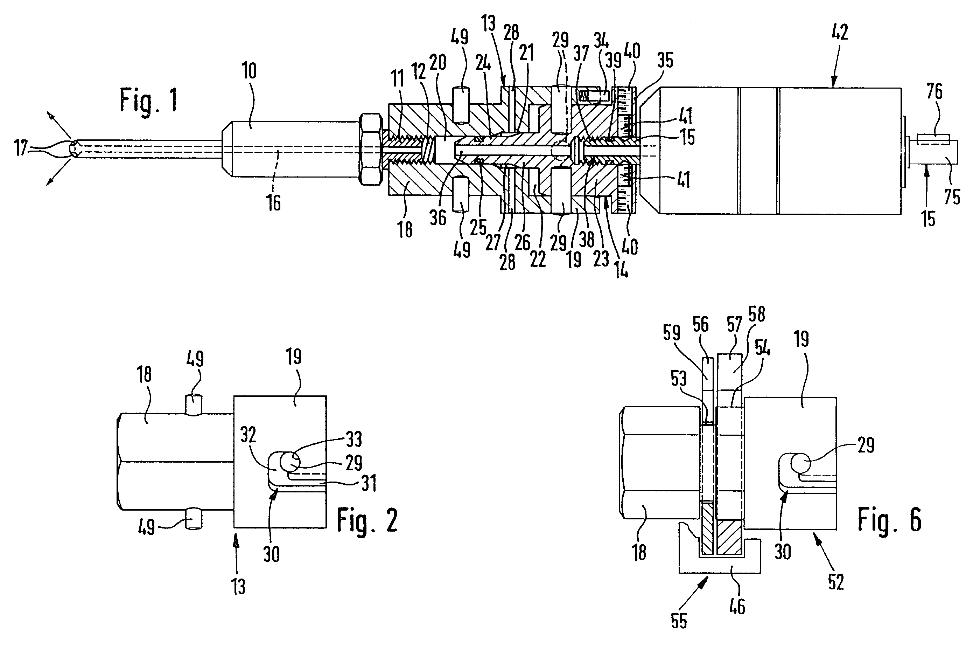

Bei dem in den Fig. 1 und 2 dargestellten ersten Ausführungsbeispiel besitzt eine als Hochdruckdüse ausgebildete und im wesentlichen in der Seitenansicht dargestellte Spritzdüse 10 zur Erzeugung eines Hochdruckspritzstrahls, beispielsweise eines Wasserstrahls, einen im Schnitt dargestellten Schraubanschluß 11, der in einen Gewindekanal 12 eines zweiten Verbindungsteils 13 eingeschraubt ist, das zusammen mit einem ersten Verbindungsteil 14 eine Verbindungseinrichtung bildet, um die Spritzdüse 10 an einer als Drehwelle 15 ausgebildeten Druckleitung zu fixieren. Die Spritzdüse 10 besitzt einen vom Schraubanschluß 11 bis zum entgegengesetzten Endbereich führenden Druckmittelkanal 16 und besitzt am spritzseitigen Ende zwei Austrittsdüsen 17, durch die bei einer Rotation der Spritzdüse 10 ein kegelartiger Spritzstrahl erzeugt wird. Diese Spritzdüse 10 stellt lediglich eine von vielen möglichen Ausführungsvarianten dar, die in das zweite Verbindungsteil 13 eingeschraubt werden können, und ist selbst nicht Bestandteil der vorliegenden Erfindung.

Das zweite Verbindungsteil 13 besteht aus einem Haltebereich 18 mit sechseckigem Querschnitt und einem einstückig daran anschließenden Verriegelungsrohr 19 mit größerem Durchmesser. Der Gewindekanal 12 befindet sich mittig am freien Ende des Haltebereichs 18. Diesem Gewindekanal 12 schließt sich ein Druckmittelkanal 12 mit etwas größerem Durchmesser an, der über einen Zwischenbereich mit allmählich zunehmendem Durchmesser in einen Einführungsbereich 21 mit noch größerem Durchmesser übergeht. Dieser mündet dann in den Innenraum 22 des Verriegelungsrohrs 19 ein, dessen Durchmesser im Vergleich zu dem des Druckmittelkanals 20 und Einführungsbereichs 21 mehr als doppelt so groß ist.

Das erste Verbindungsteil 14 besteht im wesentlichen aus einem Verriegelungszylinder 23, dessen Außendurchmesser im wesentlichen dem Durchmesser des Innenraums 22 des Verriegelungsrohrs 19 entspricht, so daß er mit relativ wenig Spiel in diesen Innenraum 20 eingeschoben werden kann. Dabei greift ein konzentrischer, als Rohrfortsatz ausgebildeter und einstückig an den Verriegelungszylinder 23 angeformter Druckmittelauslaßbereich 24 in den Druckmittelkanal 20 mit geringem Spiel ein und ist gegenüber diesem durch eine Ringdichtung 25 abgedichtet. Eine solche Ringdichtung kann sich alternativ oder zusätzlich auch in einer Nut um den Druckmittelkanal 20 befinden. Das Einführen des Druckmittelauslaßbereichs 24 in den Druckmittelkanal 20 wird durch den Einführungsbereich 21 mit größerem Durchmesser erleichtert.

Der Druckmittelauslaßbereich 24 besitzt an seinem dem Verriegelungszylinder 23 zugewandten Endbereich einen Ringbereich 26, dessen Durchmesser dem des Einführungsbereichs 21 so angepaßt ist, daß er im wesentlichen dichtend in diesen eingreift. Im vollständig eingeschobenen Zustand gemäß Fig. 1 bildet sich dabei ein Ringraum 27 zwischen dem Druckmittelauslaßbereich 24 und dem Einführungsbereich 21, der über zwei (oder mehrere) radiale Kanäle 28 mit dem Außenraum verbunden ist. Falls bei einer undichten Ringdichtung 25 daher Druckmittel in diesen Ringraum 27 gelangt, kann es über diese Kanäle 28 nach außen gelangen und zeigt die Undichtigkeit der Ringdichtung 25 an.

Der Verriegelungszylinder 23 besitzt über den Umfang verteilt vier radial nach außen überstehende Bolzen 29, von denen in Fig. 1 nur drei erkennbar sind. Diese greifen im verriegelten Zustand gemäß Fig. 2 in bajonettverschlußartige Verriegelungsausnehmung 30 im Verriegelungsrohr 19 ein. Diese Verriegelungsausnehmungen 30 besitzen einen zur Stirnseite des Verriegelungsrohrs 19 hin offenen axialen Einsteckbereich 31, einen quer dazu verlaufenden Drehbereich 32 und eine am Ende dieses Drehbereichs 32 angeordnete Verrastungsausnehmung 33. Im verriegelten Zustand werden die Bolzen 29 in der Verrastungsausnehmung 33 durch einen axial verschiebbaren, federbelasteten Bolzen 34 gehalten, der verschiebbar in den stirnseitigen Endbereich des Verriegelungsrohrs 19 eingelassen ist und im verriegelten Zustand federnd an einem Ringbereich 35 anliegt, der am freien Endbereich des Verriegelungszylinders 23 umfangsseitig einstückig angeformt ist. Selbstverständlich können auch mehrere solche federbelastete Bolzen 34 vorgesehen sein. Im übrigen trägt auch der Innendruck des Druckmittels dazu bei, daß die Bolzen 29 in den Verrastungsausnehmungen 23 drehsicher gehalten werden.

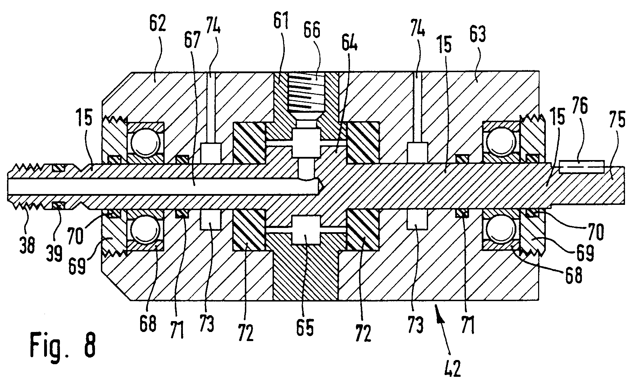

Ein konzentrischer Druckmittelkanal 36 verläuft in axialer Richtung durch das erste Verbindungsteil 14. Er erweitert sich im vom Druckmittelauslaßbereich 24 abgewandten Endbereich des Verriegelungszylinders 23 zu einem Gewindekanal 37, in den das als Schraubanschluß 38 ausgebildete Ende der Drehwelle 15 eingeschraubt werden kann. Eine Ringdichtung 39 in einer Umfangsnut der Drehwelle 15 sorgt für die erforderliche Abdichtung. Zwei radial durch den Verriegelungszylinder 23 und den Ringbereich 35 verlaufende Gewindebohrungen 40 dienen zur Aufnahme von Halteschrauben 41, die in entsprechende Ausnehmungen am Außenumfang der Drehwelle 15 eingeschraubt werden können, um eine drehsichere Fixierung des ersten Verbindungsteils 14 an der Drehwelle 15 zu erreichen. Zur drehbaren Lagerung der Drehwelle 15 ist ein Lagergehäuse 42 vorgesehen, das im Zusammenhang mit Fig. 8 noch näher erläutert wird.

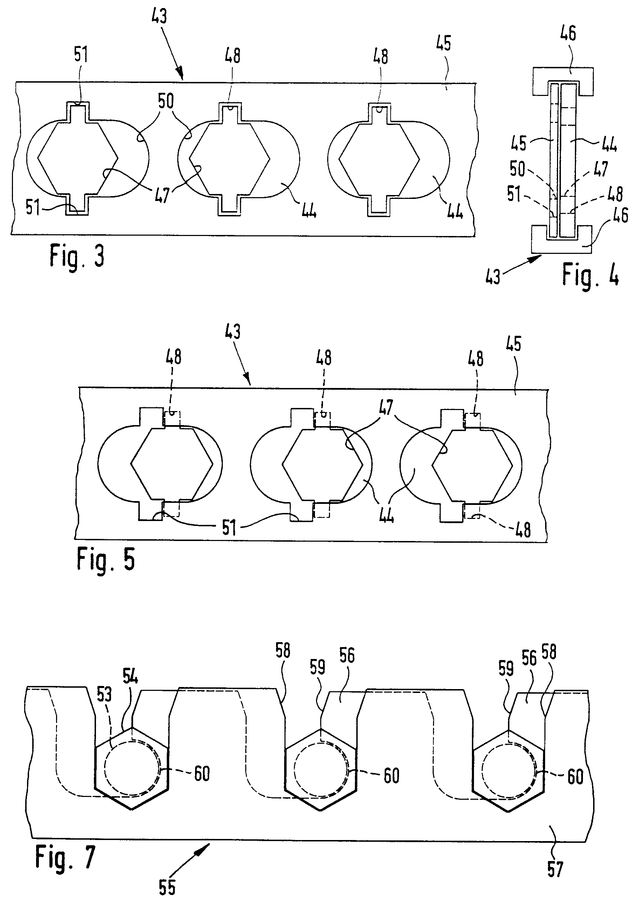

Das erste Verbindungsteil 14 bleibt nach einer ersten Montage im allgemeinen fest an der Drehwelle 15 fixiert, wahrend verschiedene zweite Verbindungsteile 13 jeweils eine Spritzdüse 10 tragen und auswechselbar am ersten Verbindungsteil 14 fixiert werden können. Die jeweils nicht benötigten zweiten Verbindungsteile 13 werden in einem Magazin 43 aufbewahrt, wie es in den Fig. 3 bis 5 näher dargestellt ist. Dieses Magazin besteht aus zwei aneinanderliegenden langgestreckten parallelen Halteplatten 44, 45, die gegeneinander verschiebbar in zwei Führungen 46 gehalten sind. Dabei greifen die oberen und unteren Längsränder der Halteplatten 44, 45 in entsprechende Führungsausnehmungen dieser Führungen 46 ein. Die Halteplatte 44, die in den Fig. 3 und 5 als von der Halteplatte 45 verdeckte hintere Platte dargestellt ist, besitzt mehrere beabstandet voneinander angeordnete Aufnahmeausnehmungen 47, die eine der Kontur des Haltebereichs 18 des zweiten Verbindungsteils 13 entsprechende sechseckige Kontur zur Aufnahme dieses Haltebereichs 18 besitzen. Nach oben und nach unten besitzen diese Aufnahmeausnehmungen 47 rechteckige Erweiterungen 48, um ein Durchschieben von zwei Bolzen 49 zu ermöglichen, die gegenüberliegend in den Haltebereich 18 eingelassen sind und sich radial nach außen erstrecken.

Die andere Halteplatte 45 besitzt ebenfalls Aufnahmeausnehmungen 50 in einem entsprechenden Raster, die eine ellipsenartige Gestalt besitzen und ebenfalls oben und unten rechteckige Erweiterungen 51 aufweisen. Die Höhe und Breite der Aufnahmeausnehmungen 50 übersteigt die der Aufnahmeausnehmungen 47. Auch die Erweiterungen 51 sind gegenüber den Erweiterungen 48 etwas vergrößert.

Zum Einführen oder Herausnehmen von mit Spritzdüsen 10 versehenen zweiten Verbindungsteilen 13 befindet sich das Magazin 43 in der in Fig. 3 dargestellten Schiebeposition, in der die Erweiterungen 48 mit den Erweiterungen 51 fluchten. Beispielsweise nach dem Einschieben eines zweiten Verbindungsteils 13 wird die Halteplatte 45 in die in Fig. 5 dargestellte Schiebeposition verschoben, so daß nunmehr die Bolzen 49 verriegelt und der Haltebereich 18 zwischen den Aufnahmeausnehmungen 47 und 50 gehalten und fixiert wird. Zum Lösen eines zweiten Verbindungsteils 13 wird die Halteplatte 45 wieder in die in Fig. 3 dargestellte Schiebestellung verschoben.

In Fig. 6 ist eine gegenüber Fig. 2 abgewandelte Version eines zweiten Verbindungsteils 52 dargestellt. Gleiche oder gleich wirkende Bauteile oder Bereiche sind mit denselben Bezugszeichen versehen und nicht nochmals beschrieben. Zwischen dem Haltebereich 18 und dem Verriegelungsrohr 19 befindet sich jetzt ein eingeformter Verbindungsbereich mit zwei abgestuften Querschnittskonturen 53, 54. Die haltebereichseitige Querschnittskontur 53 ist rund mit kleinerem Durchmesser, während die daran anschließende verriegelungsrohrseitige Querschnittskontur 54 sechseckig ist und einen größeren Durchmesser aufweist. Ein hierfür vorgesehenes Magazin 55 ist auch in Fig. 7 dargestellt. Es besteht wiederum im wesentlichen aus zwei aneinanander verschiebbaren Halteplatten 56, 57. Die Halteplatte 57 besitzt zum oberen Längsrand hin offene Ausnehmungen 58, die eine zum Einschieben der Querschnittskontur 54 von oben her angepaßte Breite und im unteren Bereich eine angepaßte eckige Gestalt besitzen. Die Halteplatte 56 besitzt ebenfalls zum oberen Rand hin offene Ausnehmungen 59 in entsprechendem Abstandsraster, die im unteren Bereich nach einer Seite hin halbkreisförmige Erweiterungen 60 besitzen, deren Durchmesser im wesentlichen dem der Querschnittskontur 53 entsprechen.

Bei diesem Ausführungsbeispiel werden die zweiten Verbindungsteile 52 von oben her in die zunächst fluchtenden Ausnehmungen 58, 59 eingelegt. Dann wird die Halteplatte 56 in die in Fig. 7 dargestellte Position verschoben, in der die Querschnittskontur 53 in die halbkreisförmige Erweiterung 60 eingreift. Hierdurch wird das jeweilige zweite Verbindungsteil 52 oder mehrere Verbindungsteile entsprechend dem in den Fig. 3 bis 5 dargestellten Magazin klemmend fixiert und dadurch sicher gehalten.

Eine Greifvorrichtung zum Umsetzen der mit Spritzdüsen versehenen zweiten Verbindungsteile 13 zwichen dem ersten Verbindungsteil 14 und dem jeweiligen Magazin 43 bzw. 55 wurde zur Vereinfachung nicht dargestellt. Es kann sich dabei um eine bekannte Manipulationsanordnung oder Roboter-Anordnung handeln.

Das in Fig. 8 im Schnitt dargestellte Lagergehäuse 42 zur drehbaren Lagerung der Drehwelle 15 besteht im wesentlichen aus drei Teilen, nämlich einem mittleren ringartigen Druckanschlußbereich 61, dem sich zu beiden Seiten zylinderartige Lagerbereiche 62, 63 anschließen. Diese drei Teile werden in nicht dargestellter Weise durch axiale Schrauben oder Bolzen verspannt bzw. aneinander fixiert. Der Druckanschlußbereich 61 umgreift einen Druckmittel-Einspeisungsbereich 64 im mittleren Bereich der Drehwelle 15, der gegenüber den übrigen Bereichen einen größeren Durchmesser aufweist. Eine Außenringnut am Druckmittel-Einspeisungsbereich 64 und eine Innenringnut am Druckanschlußbereich 61 bilden zusammen einen Ringkanal 65, der radial nach außen mit einem Gewindekanal 66 zum äußeren Anschluß einer Druckmittelleitung verbunden ist. Weiterhin erstreckt sich von diesem Ringkanal 65 aus eine Druckmittelleitung 67 zunächst radial nach innen und dann konzentrisch in axialer Richtung bis zum Schraubanschluß 38. An den freien Stirnseiten der Lagerbereiche 62, 63 sind in entsprechende Ausnehmungen Lager 68 zur Drehlagerung der Drehwelle 15 eingesetzt und mittels in die Lagerbereiche 62, 63 einschraubbaren Schraubdeckeln 69 fixiert. Diese Schraubdeckel 69 tragen Ringdichtungen 70 zur wellenseitigen Abdichtung des Lagergehäuses 42 nach außen. An der jeweils zu den Schraubdeckeln 69 gegenüberliegenden Seite der Lager 68 sind ebenfalls die Drehwelle 15 dichtend umgreifende Ringdichtungen 71 in entsprechenden Ringnuten der Lagerbereiche 62, 63 eingelassen. Schließlich sind die Drehwelle 15 umgreifende Dichtungsanordnungen 72 zu beiden Seiten des Druckmittel-Einspeisungsbereichs 64 so angeordnet, daß auch der Zwischenbereich zwischen dem Druckanschlußbereich 61 und dem Druckmittel-Einspeisungsbereich 64 abgedichtet ist. Zwischen den Ringdichtungen 71 und den Dichtungsanordnungen 72 sind die Drehwelle 15 umgreifende Ringkanäle 73 in den Lagerbereichen 62, 63 eingeformt, die über radiale Druckmittelkanäle 74 mit der jeweiligen Außenseite verbunden sind. Diese Druckmittelkanäle 74 entsprechen in ihrer Wirkung den Kanälen 28, das heißt, eventuell infolge von Undichtigkeiten der Dichtungsanordnungen 72 austretendes Druckmittel fließt durch diese Druckmittelkanäle 74 nach außen und macht so auf die Undichtigkeiten aufmerksam.

Die Drehwelle 15 ragt in axialer Richtung auf der einen Seite des Lagergehäuses 42 mit ihrem Schraubanschluß 38 heraus und an der gegenüberliegenden Seite mit einem Drehantriebsbereich 75, der zur drehfesten Verbindung mit einer nicht dargestellten Drehantriebsvorrichtung ein eingelassenes Mitnehmerstück 76 aufweist.

Dem als Anschluß dienenden Gewindekanal 66 zugeführtes Druckmittel gelangt bei sich drehender Drehwelle 15 über den Ringkanal 65 in die Druckmittelleitung 67, die auch mehrere vom axialen Bereich zum Ringkanal 65 führende Kanäle aufweisen kann. Von dort aus gelangt dann das Druckmittel gemäß Fig. 1 in den Druckmittelkanal 36, den Druckmittelkanal 20, den Gewindekanal 12 und den Druckmittelkanal 16 und verläßt schließlich diesen über die Austrittsdüsen 17 unter Bildung eines Spritzkegels oder einer anderen Spritzform, je nach Anordnung der Austrittsdüsen 17.

Es ist selbstverständlich auch möglich, die beschriebene, aus den beiden Verbindungsteilen 13, 14 bestehende Verbindungseinrichtung zur Verbindung von Spritzdüsen an Druckleitungen einzusetzen, die nicht drehbar ausgebildet sind.

## Patentansprüche

1. Verbindungseinrichtung zum Anschließen von Spritzdüsen an eine Druckleitung, dadurch gekennzeichnet, daß ein erstes, an der Druckleitung (15) fest fixierbares Verbindungsteil (14) einen rohrförmigen Druckmittelauslaßbereich (24) und einen Verriegelungszylinder (23) aufweist, daß ein zweites, die Spritzdüse (10) tragendes Verbindungsteil (13; 52) ein auf den Verriegelungszylinder (23) aufschiebbares Verriegelungsrohr (19) und einen den Druckmittelauslaßbereich (24) des ersten Verbindungsteils (14) im aufgeschobenen Zustand aufnehmenden Druckmittelkanal (20) aufweist, daß der Druckmittelauslaßbereich (24) und/oder der Druckmittelkanal (20) mit wenigstens einer Ringdichtung (25) versehen ist und daß eine das Verriegelungsrohr (19) am Verriegelungszylinder (23) lösbar haltende bajonettverschlußartige Steck-Dreh-Verriegelung (29, 30) vorgesehen ist.

2. Verbindungseinrichtung nach Anspruch 1, dadurch gekennzeichnet, daß der Durchmesser des Verriegelungszylinders (23) wenigstens doppelt so groß wie der Durchmesser des Druckmittelauslaßbereichs (24) ist.

3. Verbindungseinrichtung nach Anspruch 1 oder 2, dadurch gekennzeichnet, daß der Druckmittelkanal (20) einen Einführungsbereich (21) mit einem gegenüber dem des Druckmittelauslaßbereichs (24) größeren Durchmesser aufweist und daß dieser Einführungsbereich (21) über einen Zwischenbereich mit allmählich abnehmendem Durchmesser in einen Dichtungsbereich zur dichtenden Aufnahme des Druckmittelauslaßbereichs (24) übergeht.

4. Verbindungseinrichtung nach Anspruch 3, dadurch gekennzeichnet, daß der Druckmittelauslaßbereich (24) einen am Verriegelungszylinder (23) anschließenden Ringbereich (26) besitzt, der im verriegelten Zustand der beiden Verbindungsteile (13, 14) im wesentlichen dichtend am Einführungsbereich (21) anliegt, wobei zwischen dem Ringbereich (26) und dem Dichtungsbereich wenigstens ein radialer Durchgangskanal (28) durch das zweite Verbindungsteil (13) mündet.

5. Verbindungseinrichtung nach einem der vorhergehenden Ansprüche, dadurch gekennzeichnet, daß der Verriegelungszylinder (23) des ersten Verbindungsteils (14) wenigstens zwei radial nach außen weisende Bolzen (29) oder Vorsprünge aufweist, die im verriegelten Zustand in bajonettverschlußartige Verriegelungsausnehmungen (30) des Verriegelungsrohrs (19) eingreifen.

6. Verbindungseinrichtung nach Anspruch 5, dadurch gekennzeichnet, daß wenigstens eine zwischen dem steckseitigen Endbereich des Verriegelungsrohrs (19) und einem Ringvorsprung (35) am Verriegelungszylinder (23) im verriegelten Zustand in axialer Richtung eine kraftausübende Druckfederanordnung (34) vorgesehen ist.

7. Verbindungseinrichtung nach Anspruch 5 oder 6, dadurch gekennzeichnet, daß die bajonettverschlußartigen Verriegelungsausnehmungen (30) einen axialen Einsteckbereich (31) und einen quer dazu verlaufenden Drehbereich (32) aufweisen, der am Ende eine die Drehbewegung verhindernde Verrastungsausnehmung (33) besitzt.

8. Verbindungseinrichtung nach einem der vorhergehenden Ansprüche, dadurch gekennzeichnet, daß ein zur Aufnahme von mehreren der zweiten Verbindungsteile (13; 52) ausgebildetes Magazin (43; 55) vorgesehen ist.

9. Verbindungseinrichtung nach Anspruch 8, dadurch gekennzeichnet, daß das zweite Verbindungsteil (13) einen an das Verriegelungsrohr (19) anschließenden, die Spritzdüse (10) tragenden Haltebereich (18) mit vieleckigem Querschnitt aufweist, der zur Aufnahme in dem zwei aneinander verschiebbare, mit mehreren Aufnahmeöffnungen (50, 51) versehene Halteplatten (44, 45) aufweisenden Magazin (43) ausgebildet ist.

10. Verbindungseinrichtung nach Anspruch 9, dadurch gekennzeichnet, daß der Haltebereich (18) wenigstens einen radial nach außen weisenden Vorsprung oder Bolzen (49) besitzt, der zusammen mit dem Haltebereich (18) eine Querschnittskontur aufweist, die der der Aufnahmeöffnungen (47) einer der Halteplatten (44) im wesentlichen entspricht, wobei durch Verschiebung der Halteplatten (44, 45) gegeneinander nach dem Durchstecken eine Verriegelung der Vorsprünge oder Bolzen (49) und ein Fixieren des Haltebereichs (18) erfolgt.

11. Verbindungseinrichtung nach Anspruch 8, dadurch gekennzeichnet, daß das zweite Verbindungsteil (52) einen an das Verriegelungsrohr (19) anschließenden, die Spritzdüse (10) tragenden Haltebereich (18) aufweist, wobei ein abgestufter, zwei unterschiedliche Querschnittskonturen (53, 54) aufweisender Verbindungsbereich zwischen dem Verriegelungsrohr (19) und dem Haltebereich (18) zur Aufnahme in ein zwei aneinander verschiebbare, mit mehreren Aufnahmeausnehmungen (58, 59) versehene Halteplatten (56, 57) aufweisendes Magazin (55) ausgebildet ist.

12. Verbindungseinrichtung nach Anspruch 11, dadurch gekennzeichnet, daß die erste Querschnittskontur (54) zum verdrehsicheren Halten in den schlitzartigen Aufnahmeausnehmungen (58) der ersten Halteplatte (56) ausgebildet ist, während die zweite Querschnittskontur (53) an eine Verriegelungsausnehmung (60) der zweiten Halteplatte (57) angepaßt ist, die durch Verschiebung der beiden Halteplatten (56, 57) gegeneinander in Anlage an die zweite Querschnittskontur (53) gelangt.

13. Verbindungseinrichtung nach einem der Ansprüche 8 bis 12, dadurch gekennzeichnet, daß die beiden Halteplatten (44, 45; 56, 57) in gemeinsamen Führungsschienen (46) geführt sind.

14. Verbindungseinrichtung nach einem der vorhergehenden Ansprüche, dadurch gekennzeichnet, daß das erste Verbindungsteil (14) einen Schraubanschluß (37) für die Druckleitung (15) und Drehverriegelungsmittel (41) aufweist.

15. Verbindungseinrichtung nach einem der vorhergehenden Ansprüche, dadurch gekennzeichnet, daß die Druckleitung (15) als in einem Lagergehäuse (42) gelagerte Drehwelle ausgebildet ist.

16. Verbindungseinrichtung nach Anspruch 15, dadurch gekennzeichnet, daß sich ein Druckmittelkanal (67) in der als Drehwelle ausgebildeten Druckleitung (15) vom Anschlußende (38) für das erste Verbindungsteil (14) bis zu einem Druckmittel-Einspeisungsbereich (64) erstreckt und dort in einem Ringkanal (65) mündet, der zwischen dem Druckmittel-Einspeisungsbereich (64) und einem diesen umgreifenden Druckanschlußbereich (61) des Lagergehäuses (42) gebildet wird, und daß ein äußerer Druckanschluß (66) des Druckanschlußbereichs (61) über einen radialen Kanal mit dem Ringkanal (65) verbunden ist.

17. Verbindungseinrichtung nach Anspruch 16, dadurch gekennzeichnet, daß das im wesentlichen dreiteilige Lagergehäuse (42) aus dem Druckanschlußbereich (61) und zwei zu beiden Seiten desselben angeordneten Lagerbereichen (62, 63) für die als Drehwelle ausgebildete Druckleitung (15) besteht.
